# EUROPÄISCHE PATENTSCHRIFT

(11) **EP 0 853 565 B1**
(45) Veröffentlichungstag und Bekanntmachung des Hinweises auf die Patenterteilung: **21.11.2001**
(21) Anmeldenummer: 97923800.3
(22) Anmeldetag: 10.05.1997
(51) Int. Cl.: B60S 1/38

(54) **WISCHBLATT FÜR SCHEIBEN VON KRAFTFAHRZEUGEN**
WIPER BLADE FOR MOTOR VEHICLE WINDSHIELDS
LAME D'ESSUIE-GLACE POUR VITRES DE VEHICULES A MOTEUR

(30) Priorität: 05.07.1996 DE 29611721 U
(43) Veröffentlichungstag der Anmeldung: 22.07.1998
(73) Patentinhaber: ROBERT BOSCH GMBH, 70442 Stuttgart (DE)
(72) Erfinder: MERKEL, Wilfried, D-77876 Kappelrodeck (DE); KOTLARSKI, Thomas, D-77830 Bühlertal (DE)
(86) Internationale Anmeldenummer: DE9700949
(87) Internationale Veröffentlichungsnummer: WO9801327

(56) Entgegenhaltungen:
- DE-A- 3 827 875
- US-A- 3 192 551

## Beschreibung

### Stand der Technik

Die Erfindung geht aus von einem Wischblatt nach dem Oberbegriff des Anspruchs 1. Bei einem bekannten Wischblatt dieser Art (DE-A-26 14 457 und US-A-3,192,551) soll eine möglichst gleichmäßige Verteilung des Wischblatt-Anpreßdrucks an der zu wischenden Scheibenoberfläche durch eine unterschiedliche Dicke des Tragelements erreicht werden, wobei der Mittelabschnitt des Tragelements dicker und damit steifer ist als die dünneren und damit biegsameren Endabschnitte des Tragelements. Eine solche Tragelementausbildung mag allenfalls bei aus Kunststoff gefertigten Tragelementen einigermaßen wirtschaftlich realisierbar sein, doch muß auch in diesem Fall jedes Tragelement für sich in einer Form gepreßt bzw. gespritzt werden. Bei längeren Wischblättern kann es darüber hinaus noch zu Instabilitäten zwischen den Längsschienen kommen.

### Vorteile der Erfindung

Wenn jedoch die Längsschienen des Tragelements bzw. das gesamte Tragelement über deren gesamte Längserstreckung eine gleichbleibende Dicke haben, können diese - und damit das gesamte Tragelement - besonders kostengünstig extrudiert werden, wenn diese Bauelemente aus Kunststoff gefertigt werden sollen. Die Verringerung der Breite des Tragelements ist auf einfache Weise durch entsprechendes Beschneiden der äußeren Längs-Seitenkanten möglich. Ein weiterer Vorteil ergibt sich dadurch, daß das Tragelement auch aus entsprechend dimensioniertem Federbandstahl geschnitten werden kann.

Für den Fall, daß die Längserstreckung des Tragelements ein bestimmtes Maß übersteigt, so daß sich eine gewisse Labilität der Längsschienen bzw. des Tragelements ergibt, kann die erforderliche Stabilität des Tragelements dadurch sicher gestellt werden, daß zwischen den beiden an den Enden der Längsschienen angeordneten Querstegen des Tragelements an den beiden Längsschienen angreifende Stabilisierungsmittel angeordnet sind.

Je nach Auswahl des Materials für die Klammern ist zweckmäßig, wenn diese kraftschlüssig oder formschlüssig mit den Längsschienen verbunden sind. Selbstverständlich ist auch eine kraft- und formschlüssige Verbindung möglich.

Die als Klammern ausgebildeten Stabilisierungsmitteln sind zweckmäßig mit Krallenansätzen versehen, welche die voneinander abgewandten Längskanten der Tragelement-Längsschienen umgreifen.

Eine zusätzliche Vereinfachung des Wischblatts ergibt sich, wenn in weiterer Ausgestaltung der Erfindung wenigstens eine Stabilisierungsklammer mit einer Anschlußvorrichtung für den angetriebenen Wischarm ausgestatttet ist.

Wenn das Tragelement aus Federbandstahl hergestellt ist, kann ein besonders niedrig bauendes Wischblatt erzielt werden, das gute Eigenschaften hinsichtlich der vor der Winschutzscheibe vorhandenen Strömungsverhältnisse der anströmenden Luft aufweist.

Weitere Vorteile und Verbesserungen des Wischblatts sind der nachfolgenden Beschreibung eines Ausführungsbeispiels zu entnehmen, das anhand der Zeichnung erläutert wird.

### Zeichnung

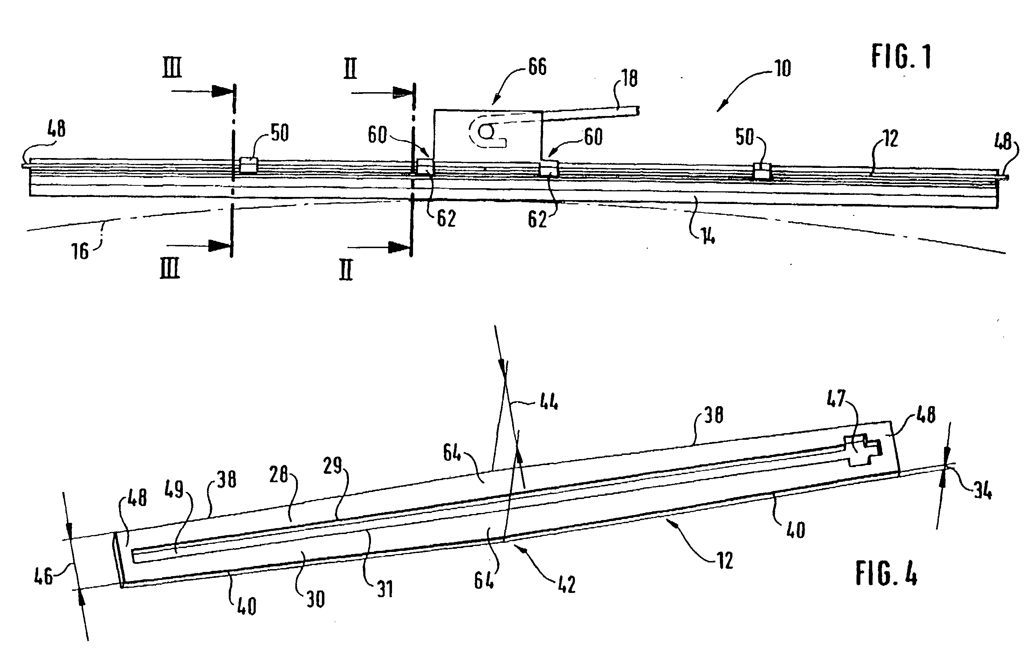

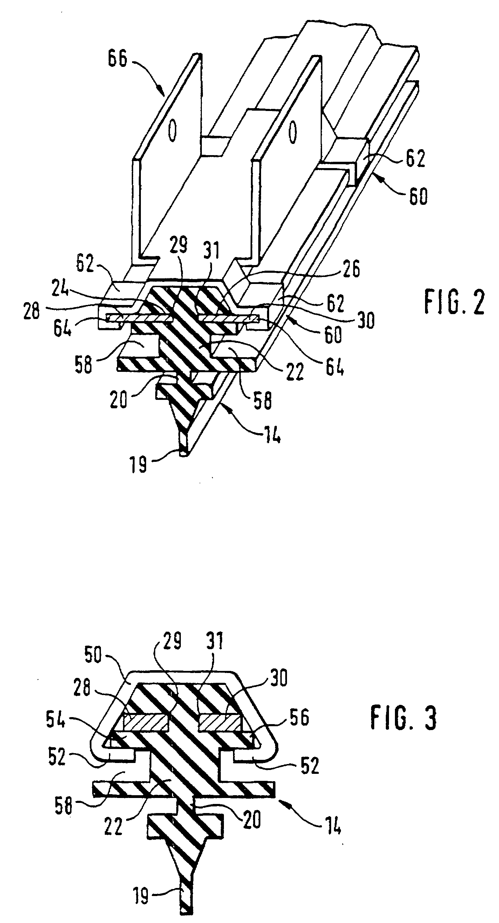

Es zeigen Figur 1 eine Seitenansicht eines erfindungsgemäßen Wischblatts, Figur 2 einen Schnitt durch das Wischblatt entlang der Linie II-II in Figur 1, mit einem perspektivisch dargestellten Mittelabschnitt des Wischblatts in vergrößerter Darstellung, Figur 3 die Schnittfläche eines Schnitts durch das Wischblatt entlang der Linie III-III in Figur 1, in vergrößerter Darstellung und Figur 4 eine perspektivische, unmaßstäbliche Darstellung eines zum Wischblatt gehörenden Tragelements.

### Beschreibung des Ausführungsbeispiels

Ein in Figur 1 dargestelltes Wischblatt 10 weist ein elastisches, beim Ausführungsbeispiel aus Federbandstahl hergestelltes Tragelement 12 (Figur 4) für eine aus einem gummiähnlichen Material gefertigte Wischleiste 14 auf. In Figur 1 ist das langgestreckte Wischblatt 10 der Einfachheit halber in einer Position gezeichnet, in der es sich in der Praxis kaum befinden kann, weil das elastische Tragelement derart vorgespannt ist, daß die Wischleiste 14 so gekrümmt ist, wie dies durch eine strichpunktierte Linie 16 in Figur 1 angedeutet ist. Diese Krümmung ist stärker als die maximale Krümmung der zu wischenden, in der Regel spärisch gekrümmten Kraftfahrzeugscheibe; das heißt, daß das Wischblatt 10 beim Anlegen an der zu wischenden Scheibe zunächst mit seinen beiden Endbereichen an der Scheibe zur Anlage kommt, bis es schließlich unter dem Anpreßdruck eines zur Scheibe hin belastenden Wischerarms 18 auch mit seinem Mittelbereich an der Scheibe 16 anliegt. Die eben beschriebene Krümmung des Tragelements 12 und damit des Wischblatts 10 soll bei sorgfältiger Abstimmung eine möglichst gleichmäßige Verteilung des vom angetriebenen Wischerarm 18 ausgehenden Anpreßdrucks gegen die Scheibe bewirken.

Der allgemeine Aufbau des Wischblatts soll nun im folgenden anhand der Figuren 1 bis 3 erläutert werden. Die über ihre gesamte Länge einen gleichbleibenden Querschnitt aufweisende Wischleiste 14 hat eine an der Scheibe anliegende Wischlippe 19, die über einen sogenannten Kippsteg 20 mit dem Körper 22 der Wischleiste 14 verbunden ist. In den beiden einandergegenüberliegenden Längsseiten des Wischleistenkörpers 22 sind einandergegenüberliegende Längsnuten 24 und 26 angeordnet, welche sich über die gesamte Länge der langgestreckten Wischleiste 14 erstrecken. In den Längsnuten 24 und 26 sind Längsschienen 28 und 30 des Tragelements 12 untergebracht, dessen Aufbau aus Figur 4 ersichtlich ist. Beim Ausführungsbeispiel ist das Tragelement 12 aus Federbandstahl hergestellt. Es hat über seine gesamte Länge eine gleichmäßige Dicke 34. Die beiden Längsschienen 28 und 30 des Tragelements sind so in den Längsnuten 24 und 26 der Wischleiste 14 angeordnet, daß deren gestreckte, in Figur 4 einander zugewandten Innenkanten 29, 31 dem Grund ihrer Längsnuten 24 bzw. 26 zugewandt (Fig. 2) und die vom Mittelabschnitt 42 einer jeder Längsschiene 28 bzw. 30 aus sich den Innenkanten 29, 30 annähernden Außenkanten 38 bzw. 40 voneinander abgewandt sind. Die Ausbildung des Tragelements 12 ist also so getroffen, daß seine Breite 44 an seinem Mittelabschnitt 42 größer ist als seine Breite 46 im Bereich der Enden der Längsschienen 28 und 30. Somit ergibt sich also eine Verringerung des Querschnitts der beiden Längsschienen und somit des Querschnitts des Tragelements von dem Mittelbereich 42 aus zu den Schienenenden hin. Die beiden einander benachbarten Enden der Längsschienen 28, 30 sind durch Querstege 48 einstückig miteinander verbunden. Das Tragelement 12 ist also streifenförmig und mit einem schlitzartigen Durchbruch 49 versehen.

Wenn die Länge des Wischblatts 10 und damit auch die Länge des Tragelements 12 ein gewisses Maß übersteigt, kann es zur Stabilisierung des Tragelements 12 zweckmäßig sein, zwischen den Enden der Längsschienen 28 und 30 Zwischenklammern anzuordnen, die in den Figuren 1 und 3 mit der Bezugszahl 50 versehen sind. Diese als seperate Bauelemente ausgebildete Klammern 50 umgreifen einen Teil des Wischleistenkörpers 22 und untergreifen mit ihren Krallenansätzen 52 die in den Längsnuten 24 und 26 liegenden Längsschienen 28 und 30. Da durch die Verringerung der Breite 44, 46 des Tragelements diese Längsschienen im Bereich von deren Enden nicht mehr aus den Längsnuten 24 und 26 ragen, greifen die Krallenansätze 52 nicht direkt unter die Längsschienen sondern untergreifen die unteren Wände 54 und 56 der Längsnuten 24 und 26, welche durch eine Einschnürung 58 des Wischleistenkörpers 22 gebildet sind (Figur 3). Durch zielgerichtetes Zusammendrücken der Klammern 50 kann eine gewisse Verformung des Wischleistenkörpers erreicht werden, wodurch eine Sicherung des Tragelements 12 an der Wischleiste und eine Sicherung der zum Tragelement 12 gehörenden Klammern 50 an der Wischleiste erreicht wird. Es ist jedoch auch eine formschlüssige Sicherung der Klammern 50 an den Längsschienen 28 und 30 und/oder an der Wischleiste 14 denkbar. Die Klammern 50 stabilisieren die Längsschienen 28, 30 bzw. das Tragelement 12.

Eine weitere, vorteilhafte Ausgestaltung der Zwischenklammern ist aus den Figuren 1 und 2 ersichtlich. Dort sind zwei einander benachbarte Zwischenklammern 60 zu einem einzigen Bauteil zusammgefaßt, da sie durch eine Anschlußvorrichtung 66 miteinander verbunden sind, mit deren Hilfe das Wischblatt 10 an dem angetriebenen Wischerarm 18 in ansich bekannter Weise lösbar befestigt werden kann. Da jedoch die Klammern 60 im Mittelbereich 42 des Tragelements 12 angeordnet sind (Figur 1), in welchem die voneinander abgewandten Längskanten 38 und 40 der Längsschienen aus den Längsnuten 24, 26 ragen, können Krallenansätze 62 dieser Zwischenklammern 60 direkt die aus den Längsnuten ragenden Längsleisten 64 der Längsschienen 28, 30 umgreifen. Die Sicherung der Zwischenklammern 60 an der Wischleiste erfolgt genauso wie dies für die Klammern 50 beschrieben worden ist.

Es versteht sich von selbst, daß die Änderung des Querschnitts der beiden Längsschienen 28, 30 bzw. des Tragelements 12 von dessen Mittelabschnitt 42 ausgehend den jeweiligen Gegebenheiten angepaßt werden muß, damit eine ordnungsgemäße Verteilung des Anpreßdrucks über die gesamte Wischblattlänge erreicht wird.

Die Montage des Tragelements 12 an der Wischleiste 14 erfolgt dadurch, daß deren Körper 22 über eine partielle Erweiterung 47 so in den Durchbruch 49 eingeschoben wird, bis die in den Figuren 1 bis 3 dargestellte Montageposition erreicht wird, in welcher die Innenkanten 29, 31 der Längsschienen 28 und 30 in ihre Längsnuten 24, 26 im Wischleistenkörper 22 gelangen.

Gegebenfalls werden danach die Klammern 50 und/oder 60 aufgebracht und befestigt.

## Patentansprüche

1. Wischblatt (10) für Scheiben von Kraftfahrzeugen, mit einem elastischen, langgestreckten Tragelement (12) für eine langgestreckte, aus einem flexiblen Material bestehende, an der zu wischenden Scheibe anlegbaren Wischleiste (14), die an ihren Längsseiten einander gegenüberliegende Längsnuten (24, 26) aufweist, in denen mit Abstand voneinander angeordnete Längsschienen (28, 30) des Tragelements (12) liegen, dessen Mittelabschnitt (42) eine Anschlußvorrichtung (66) für einen angetriebenen Wischerarm (18) aufweist und sich der Querschnitt der beiden Längsschienen von deren Mittelbereich aus zu den Schienenenden hin verringert, wobei die einander benachbarten Enden der Längsschienen durch jeweils einen Quersteg einstückig miteinander verbunden sind und wobei die Längsschienen (28, 30) des Tragelements (12) über ihre gesamte Längserstreckung eine gleichbleibende Dicke (34) aufweisen und sich die Breite (44) des Tragelements (12) von dessen Mittelbereich (42) aus zu seinen beiden Enden hin verringert, **dadurch gekennzeichnet, daß** zwischen den beiden Querstegen (48) des Tragelements (12) an den beiden Längsschienen (28, 30) angreifende Stabilisierungsmittel (50 bzw. 60) angeordnet sind, die als Klammer (50) ausgebildet und kraftschlüssig und/oder formschlüssig mit den Längsschienen (28, 30) des Tragelements (12) verbunden sind.

2. Wischblatt nach Anspruch 1, **dadurch gekennzeichnet, daß** die Klammer (50) die von einander abgewandten Längskanten (38, 40) der Tragelement-Längsschienen (28, 30) mit Krallenansätzen (52 bzw. 62) umgreift.

3. Wischblatt nach einem der Ansprüche 1 oder 2, **dadurch gekennzeichnet, daß** wenigstens eines der Stabilisierungsmittel (60) mit einer Anschlußvorrichtung (66) für den Wischerarm (18) versehen ist.

4. Wischblatt nach einem der Ansprüche 1 bis 3, **dadurch gekennzeichnet, daß** das Tragelement (12) aus Federbandstahl hergestellt ist.

## Claims

1. Wiper blade (10) for windows/lenses of motor vehicles, having an elastic, elongated supporting element (12) for an elongated wiper strip (14) which consists of a flexible material, can be placed against the window/lens to be wiped and, on its longitudinal sides, has mutually opposite longitudinal grooves (24, 26) in which are located longitudinal rails (28, 30), which are arranged at a distance from each other, of the supporting element (12) whose central section (42) has a connecting device (66) for a driven wiper arm (18), and the cross section of the two longitudinal rails decreases from their central region towards the rail ends, in which case the mutually adjacent ends of the longitudinal rails are connected in one piece to one another by means of a respective transverse web, and in which case the longitudinal rails (28, 30) of the supporting element (12) have a constant thickness (34) over their entire longitudinal extent and the width (44) of the supporting element (12) decreases from its central region (42) towards its two ends, **characterized in that** stabilizing means (50 and 60) which respectively act on the two longitudinal rails (28, 30) are arranged between the two transverse webs (48) of the supporting element (12), are designed as clips (50) and are connected in a frictional manner and/or in an interlocking manner to the longitudinal rails (28, 30) of the supporting element (12).

2. Wiper blade according to Claim 1, **characterized in that** the clip (50) engages with claw-type projections (52 and 62, respectively) around the mutually remote longitudinal edges (38, 40) of the supporting-element longitudinal rails (28, 30).

3. Wiper blade according to one of Claims 1 or 2, **characterized in that** at least one of the stabilizing means (60) is provided with a connecting device (66) for the wiper arm (18).

4. Wiper blade according to one of Claims 1 to 3, **characterized in that** the supporting element (12) is produced from spring band steel.

## Revendications

1. Lame d'essuie-glace (10) pour vitre de véhicules à moteur, comportant un élément support (12) pour une barrette (14) allongée, réalisée en une matière flexible et pouvant être mise en contact avec la vitre à essuyer, comportant sur ses faces longitudinales des ramures (24, 26) longitudinales opposées, dans lesquelles sont insérées des glissières longitudinales (28, 30) de l'élément support (12) à une certaine distance l'une de l'autre, dont la section médiane (42) comporte un dispositif de raccordement (66) pour un bras d'entraînement d'essuie-glace (18), et dont la section des deux glissières depuis leur section médiane, se rétrécit jusqu'à leurs extrémités, les extrémités voisines de ces deux glissières étant respectivement reliées entre elles par une entretoise transversale sous forme d'une pièce unique, et les glissière (28, 30) de l'élément support (12) ayant une épaisseur (34) constante sur toute leur longueur, et la largeur (44) de l'élément support (12) se réduisant à partir du milieu (42) jusqu'à ses extrémités,
**caractérisée en ce que**
entre les deux entretoises transversales (48) de l'élément support (12), sont placés des dispositifs stabilisateurs (50 ou 60) en forme de brides (50) qui s'accrochent sur les deux glissières (28, 30), et qui sont reliées aux glissières (28, 30) de l'élément support (12), par combinaison de force et/ou de forme.

2. Lame d'essuie-glace selon la revendication 1,
**caractérisée en ce que**
la bride (50) entoure les bords longitudinaux non tournés l'un vers l'autre (38, 40) des glissières (28, 30) de l'élément support au moyen de dispositifs à griffes (52, 62).

3. Lame d'essuie-glace selon l'une des revendications 1 ou 2,
**caractérisée en ce que**
au moins l'un des éléments stabilisateurs (60) comporté un dispositif d'accrochage (66) pour le bras d'essuie-glace (18).

4. Lame d'essuie-glace selon l'une quelconque des revendications 1 à 3,
**caractérisée en ce que**
l'élément support (12) est réalisé en feuillard d'acier à ressort.
